Europäisches Patentamt

European Patent Office

Office européen des brevets

(11) Publication number: **0 208 467**

**A1**

## (12) EUROPEAN PATENT APPLICATION

(21) Application number: 86304898.9

(51) Int. Cl.4: **H02K 7/12**

(22) Date of filing: 25.06.86

(30) Priority: 25.06.85 AU 1195/85

(43) Date of publication of application:
14.01.87 Bulletin 87/03

(84) Designated Contracting States:
AT BE CH DE FR GB IT LI LU NL SE

(71) Applicant: **RINEFAS LIMITED**
**Unit 3, 45-47 Vore Street**
**Silverwater New South Wales 2141(AU)**

(72) Inventor: **Haage, Dieter**
**48 Kilmarnock Road**
**Engadine New South Wales 2233(AU)**

(74) Representative: **Baillie, Iain Cameron et al**
**c/o Ladas & Parry Isartorplatz 5**
**D-8000 München 2(DE)**

(54) **Brake mechanism for electric rotating machines.**

(57) An axial flux induction electric machine (10) having a stator (11) and a rotor (14), the rotor (14) is supported on a shaft (15) which supports the rotor - (14) so as to be movable between an operative position and a brake position wherein a brake means engages the rotor (14) to inhibit rotation thereof.

EP 0 208 467 A1

FIG. 3

FIG. 4

## BRAKE MECHANISM FOR ELECTRIC ROTATING MACHINES

The present invention relates to electric motor driven devices and more particularly to devices driven by axial flux induction electric motors.

Particularly in appliances such as kitchen appliances, including food mixers, shredders and juice extractors, it is preferable that the rotating assembly of the appliance be stopped as soon as possible once power to the motor has been switched off. In the case of food processing machines where a series of knives are employed, it is preferable that the knives be stopped as soon as possible, for safety purposes having regard to the operator.

Previously constructed appliances have not in all circumstances been provided with a brake mechanism, and where such a brake mechanism has been employed, they are generally inefficient and add considerably to the overall cost of construction of the appliance.

It is the object of the present invention to overcome or substantially ameliorate the above disadvantages.

The present invention also relates to use of axial flux induction electric motors as disclosed in US Patents 4 320 645, 4 410 820 and 4 507 947.

There is disclosed herein an axial flux induction electric motor having a stator with a radial face having radially extending slots through which field windings extend, a rotor, coaxial with said stator and having a radial face extending generally parallel to the radial face of said stator, a shaft rotatably supporting said rotor for rotation about the longitudinal axis of the shaft, said rotor being movable longitudinally of said axis from an operative position wherein the radial face of said rotor is positioned adjacent the radial face of said stator, and a brake position wherein the radial face of said rotor is spaced further from the radial face of said stator relative to said operative position, and brake means to engage said rotor when said rotor is located in said brake position, so as to inhibit rotation thereof.

Preferred forms of the present invention will now be described by way of example with reference to the accompanying drawings wherein:

Fig. 1 is a schematic perspective view of an axial flux induction electric motor;

Fig. 2 is a schematic parts exploded perspective view of the motor of Fig. 1;

Fig. 3 is a schematic sectioned side elevation of the motor of Fig. 1 in an operative mode;

Fig. 4 is a schematic sectioned side elevation of the motor of Fig. 1 in a non-operative mode;

Fig. 5 is a schematic sectioned side elevation of a further axial flux induction electric machine;

Fig. 6 is a schematic sectioned side elevation of the motor of Fig. 5 in an operative mode; and

Fig. 7 is a schematic part sectioned exploded view of a portion of the motor of Fig. 5.

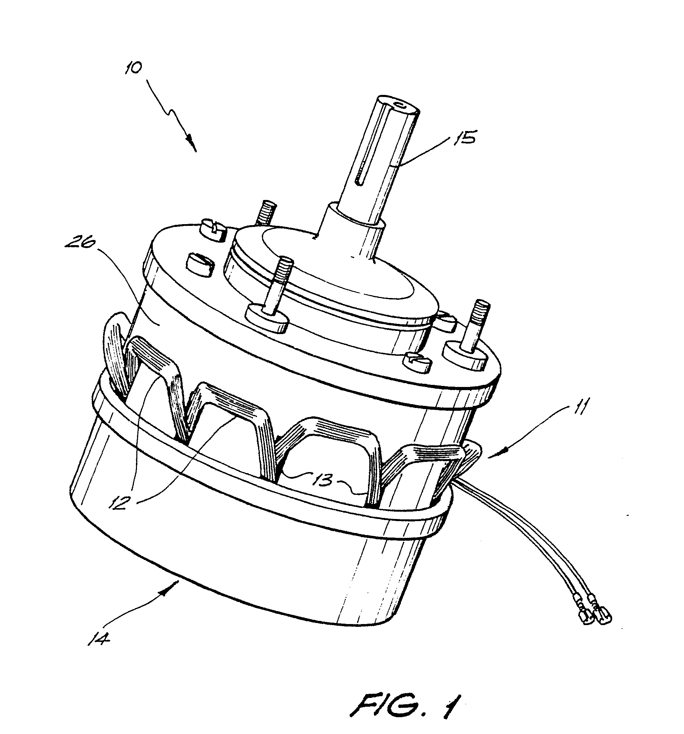

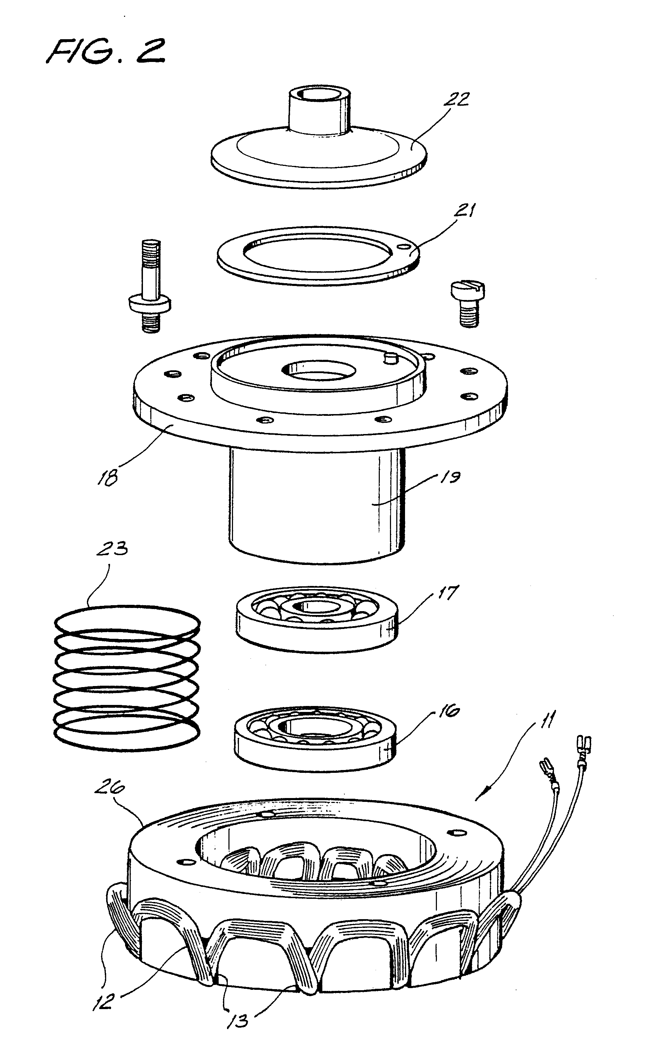

In Figures 1 to 4 there is schematically depicted an axial flux induction electric motor 10 which is basically of similar construction to the axial flux induction electric motors described in the abovementioned US Patents. The motor 10 includes a stator 11 having field windings 12 extending through radially extending slots 13. The slots 13 extend along a radial face of the core 26 of the stator 11. The motor 10 further includes a rotor 14 rotatably supported by a shaft 15 extending through the stator 11.

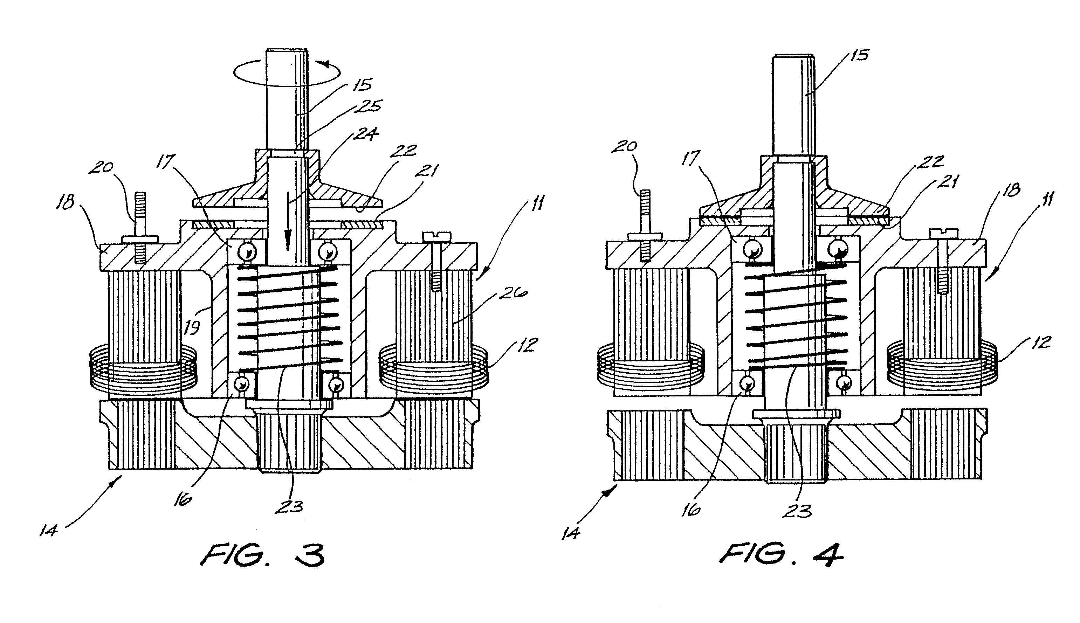

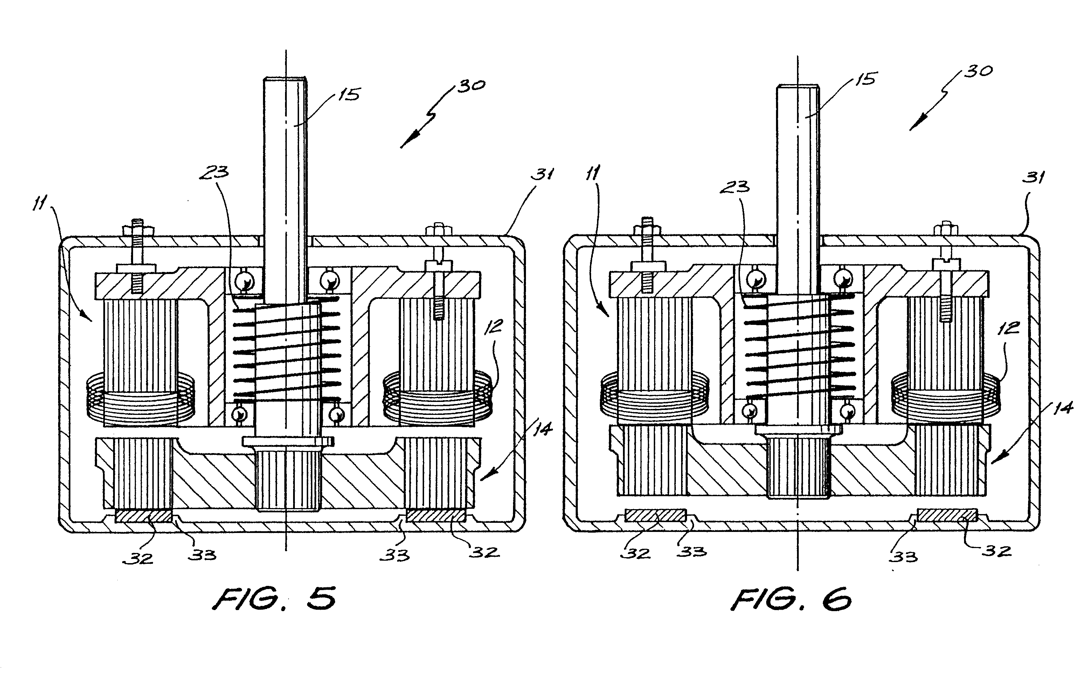

As best seen in Figures 3 and 4 the rotor is rotatably supported by two bearing assemblies 16 and 17. However it should be appreciated that although the shaft 15 is supported by the bearing assemblies 16 and 17, the shaft 15 is slidable therethrough longitudinally of its axis.

Supporting the bearing assemblies 16 and 17 is a base 18 having an annular flange 19 which directly engages the bearing assemblies 16 and 17. The core 26 is directly mounted on the base 18, with a base 18 in turn being fixed to the motor housing by means of threaded fasteners 20. One face of the base 18 is provided with a brake member 21, of circular configuration so as to surround the shaft 15.

Fixed to the shaft 15 is a brake flange 22, which brake flange 22 is positioned to selectively engage the brake member 21.

Extending between the bearing assemblies 16 and 17 is a spring 23 which biases the shaft 15 to move in the direction 24.

As best seen in Figures 3 and 4, the rotor is movable between an operable position (as shown in Figure 3) and a non-operative position (as shown in Figure 4). In the operative position the brake member 21 is spaced from the brake flange 22 thereby permitting rotation of the rotor 14. In the non-operative position (Figure 4) the brake member 21 is in contact with the brake flange 22 thereby inhibiting or preventing rotation of the rotor 14.

In operation of the abovedescribed motor 10, upon an electric current being delivered to the field windings 11, an electromagnetic field is set up attracting the rotor 14 towards the stator 11. Accordingly the brake flange 22 is moved from contact with the brake member 21. Accordingly the rotor 14 is then free for rotational movement. Upon the field windings 12 being electrically isolated, the rotor 14 ceases to be attracted to the stator 11 and is moved under the influence of the spring 23 to the non-operative position of Figure 4, that is, with the brake flange 22 in contact with the brake member 21.

The operative position of the rotor 14 is defined by engagement between a step 25 formed on the shaft 15, and the bearing assembly 17.

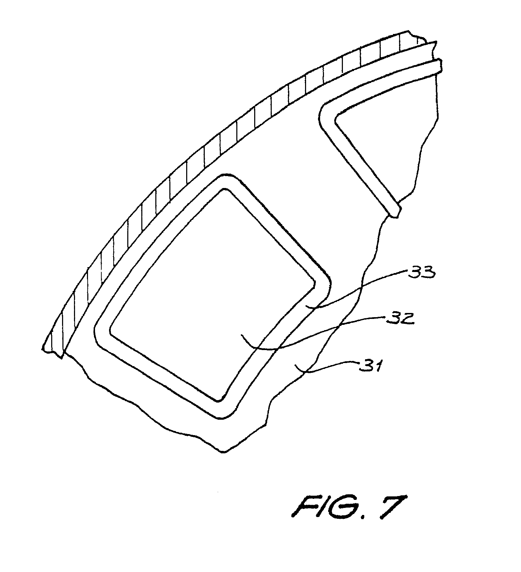

In Figures 5 to 7 there is schematically depicted an alternative construction to the motor 10 of Figure 1. In Figures 5 and 6 there is schematically depicted an axial flux induction electric motor 30 of substantially identical construction to the motor of Figure 1. However, in this particular embodiment the motor 30 is provided with housing 31 which supports brake pads 32 positioned within recesses defined by flanges 33.

The brake pads 32 replace the brake member 21, while the brake pads 32 directly engage the rotor 14. Accordingly when an electric current is delivered to the field windings 12, the rotor 14 is moved from contact with the brake pads 32, thereby freeing it for rotational movement. Upon the field windings 12 being electrically isolated, the spring 23 moves the rotor 14 into contact with the rotor 14 with the effect that the rotational motion of the rotor 14 is braked.

## Claims

1. An axial flux induction electric motor (10) having a stator (11) with a radial face with radially extending slots (13) through which field windings - (12) extend, a rotor (14), coaxial with said stator and having a radial face extending generally parallel to the radial face of said stator, a shaft (15) rotatably supporting said rotor (14) for rotation about the longitudinal axis of the shaft (15), said rotor (14) being movable longitudinally of said axis from an operative position wherein the radial face of said rotor (14) is positioned adjacent the radial face of said stator (11), and a brake position wherein the radial face of said rotor (14) is spaced further from the radial face of said stator (11) relative to said operative position, and brake means (21) to engage said rotor (14) when said rotor (14) is located in said brake position, so as to inhibit rotation thereof.

2. The motor (10) of claim 1 further including a flange (22) fixed to said shaft (15) so as to be movable therewith, and wherein said stator (11) is provided with a brake surface (21), providing said brake means, adapted to engage said flange (22) when said rotor (14) is moved to said brake position, to thereby inhibit rotation of said rotor (14).

3. The motor (10) of claim 1 further including a housing (31) containing said rotor (14) and stator - (11) and from within which said shaft (15) projects, brake pad means (32) mounted on said housing - (31) and positioned to engage said rotor (14) when said rotor (14) is moved to said brake position.

4. The motor (10) of claim 1 further including means (23) biasing said rotor (14) to said brake position.

5. The motor (10) of claim 4 wherein the means (23) biasing said rotor (14) to said brake position is a spring (23).

FIG. 1

## FIG. 2

FIG. 3          FIG. 4

FIG. 5          FIG. 6

0 208 467

33

32

31

FIG. 7

**European Patent Office**

# EUROPEAN SEARCH REPORT

Application number

EP 86 30 4898

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 727 163 (O. MEYER) <br> * column 2, line 68 - column 3, line 71; figure * <br> --- | 1-5 | H 02 K 7/12 |
| X | PATENT ABSTRACTS OF JAPAN, vol. 7, no. 233 (E-204)[1378], 15th October 1983; JP - A - 58 123 347 (MATSUSHITA DENKI SANGYO K.K.) 22-07-1983 <br> * abstract and figure * <br> ----- | 1-5 | |
| | | | **TECHNICAL FIELDS SEARCHED (Int. Cl.4)** <br><br> H 02 K 7/00 |

The present search report has been drawn up for all claims

| Place of search | Date of completion of the search | Examiner |
|---|---|---|
| BERLIN | 15-09-1986 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82